# DEMANDE DE BREVET EUROPEEN

(11) **EP 1 956 354 A2**
(43) Date de publication de la demande: **13.08.2008**
(21) Numéro de dépôt: 08300049.7
(22) Date de dépôt: 25.01.2008
(51) Int. Cl.: G01K 3/04, G01K 11/06

(54) **Dispositif de détection et de mesure de l'exposition d'un objet à une température à contrôler**

(30) Priorité: 12.02.2007 FR 0753182
(71) Demandeur: Barbieri, Galdino, 92500 Rueil Malmaison (FR)
(72) Inventeur: Barbieri, Galdino, 92500 Rueil Malmaison (FR)
(74) Mandataire: Herrburger, Pierre

(57) **Abrégé**

Dispositif de détection et de mesure quantitative de l'exposition d'un objet à une température à contrôler avec prise en compte de la durée d'exposition.

Ce dispositif est formé d'une enveloppe contenant
- une bande de matière poreuse formant un chemin de migration avec une échelle de mesure,
- une dose de matière migrante changeant d'état au passage de la température de contrôle (TC),
- un poussoir en forme de dôme.

Le chemin de migration dans la bande poreuse (3) a son origine (31) au droit du poussoir (5). La réserve de matière migrante (6) est portée par la face intérieure (51) du poussoir (5). En position, neutre, la réserve de matière migrante (6) est écartée de l'origine (31) du chemin de migration d'une distance (e) qui ne peut être parcourue que par la déformation complète du poussoir (5) passant de sa forme neutre à sa forme active, appliquant la réserve de matière migrante (6) contre la bande poreuse (3), à l'origine (31) du chemin de migration.

## Description

La présente invention concerne un dispositif de détection et de mesure quantitative de l'exposition d'un objet à une température à contrôler avec prise en compte de la durée d'exposition. Ce dispositif est formé d'une enveloppe contenant
- une bande de matière poreuse formant un chemin de migration avec une échelle de mesure sur la bande ou sur l'enveloppe,
- une dose de matière migrante changeant d'état au passage de la température de contrôle pour se propager alors par capillarité à une vitesse déterminée, dans la bande poreuse par imprégnation progressive, donnant par sa limite de progression, une mesure quantitative de l'exposition de l'objet à une température dépassant la température de contrôle et
- un poussoir en forme de dôme, intégré à l'enveloppe et déformable de manière irréversible entre sa forme neutre stable et une forme active, stable, libérant la matière migrante dans la bande poreuse, en passant par un état métastable.

Un tel dispositif de détection est par exemple connu selon le document FR 04 03 754.

Ce document décrit notamment (figure 4) un dispositif comportant une réserve de matière migrante sur laquelle est appliquée une bande poreuse formant un chemin de migration pour la matière migrante.

Ce dispositif comporte un poussoir situé au-dessus de la réserve de matière migrante.

Pour mettre en service le dispositif, on enfonce le poussoir en le déformant de manière irréversible pour presser la bande poreuse contre la réserve de matière migrante et lorsque le dispositif est à une température dépassant la température de contrôle, la matière migrante change d'état et imprègne progressivement la bande poreuse. La matière migrante avance dans la bande poreuse, ce qui permet de détecter le dépassement de la température de contrôle et d'évaluer la durée du dépassement par comparaison de la longueur de la bande poreuse imprégnée de matière migrante avec une surface indicatrice telle qu'une graduation.

Mais, ce dispositif a l'inconvénient de ne pas garantir de façon précise la forme de l'interface entre la réserve de matière migrante et la bande poreuse, de sorte que la matière migrante passe d'une manière plus ou moins régulière dans la bande poreuse.

Cela permet certes une détection qualitative mais la détection quantitative du dépassement de la température de contrôle est imprécise. De plus, ce dispositif composé d'un certain nombre d'éléments est cher à fabriquer à cause des étapes d'assemblage et de mise en place précise des différents éléments dans l'enveloppe.

### But de l'invention

La présente invention a pour but de développer un dispositif de détection et de mesure quantitative de l'exposition d'un objet à une température non autorisée, qui soit d'un fonctionnement efficace et précis, d'une mise en oeuvre simple et d'une fabrication simple et peu coûteuse permettant une diffusion à grande échelle et son application à des produits eux-mêmes peu coûteux, tels que des produits alimentaires.

### Exposé et avantages de l'invention

A cet effet, l'invention concerne un dispositif de détection et de mesure quantitative du type défini ci-dessus caractérisé en ce que
- le chemin de migration a son origine au droit du poussoir,
- la réserve de matière migrante est portée par la face intérieure du poussoir et
- en position, neutre, la réserve de matière migrante est écartée de l'origine du chemin de migration d'une distance qui ne peut être parcourue que par la déformation complète du poussoir passant de sa forme neutre à sa forme active, appliquant la réserve de matière migrante contre la bande poreuse, à l'origine du chemin de migration.

Ce dispositif est d'une fabrication extrêmement simple et en peu détapes puisqu'il suffit de fixer la réserve de matière migrante dans le poussoir de l'enveloppe ouverte et de placer la bande de matière poreuse formant le chemin de migration, dans l'enveloppe puis de refermer l'ensemble qui est alors prêt à fonctionner. Le déclenchement du dispositif se fait de manière simple par déformation de la forme neutre à la forme active en passant par un état métastable rendant la déformation irréversible.

Comme la forme active est une forme concave, le poussoir ne peut plus être rappelé dans sa forme neutre bombée de façon convexe. L'écartement entre la réserve de matière migrante et la bande de matière poreuse lorsque le dispositif n'est pas activé, évite tout déclenchement intempestif du dispositif par écrasement de celui-ci par exemple dans l'emballage ou lors de sa manipulation préalable au déclenchement intentionnel.

Suivant une autre caractéristique avantageuse, l'enveloppe a un réceptacle de forme concave complémentaire à celle du poussoir en position active et elle est située en regard du poussoir formant une zone de contact définie entre la matière migrante libérée par le réservoir et l'origine du chemin de migration.

Ce réceptacle de forme concave complémentaire à celle du poussoir en position active permet d'appliquer la réserve de matière migrante contre la bande de matière poreuse sur une surface importante, garantissant l'imprégnation de la bande de matière poreuse au moment du dépassement de la température de contrôle et, par suite, la régularité et la fiabilité de cette imprégnation et la précision du contrôle de température.

Mécaniquement, cette réalisation est également très importante car elle permet de réduire l'épaisseur hors tout du poussoir par rapport à la surface de l'enveloppe dont il est en saillie puisque la seconde partie du mouvement du poussoir, pratiquement au-delà du plan correspondant à sa position métastable, se fait dans la cavité constituée par le réceptacle. Dans la mesure où le réceptacle est plus rigide que le poussoir, si l'épaisseur de la matière du réceptacle est plus épaisse que celle du poussoir, lorsque l'on comprime le poussoir et le réceptacle, seul le poussoir se déformera pour enclencher le dispositif. De plus, une fois que le poussoir est dans sa forme active, appliqué plus ou moins contre le réceptacle, l'ensemble est rigide ; il permet de bien comprimer la réserve de matière migrante pour que celle-ci s'en échappe lorsque la matière migrante change d'état par suite d'un dépassement de température. La forme active du poussoir est protégée par la rigidité du réceptacle de sorte que le poussoir ne risque pas d'être basculé accidentellement dans sa position neutre, séparant la réserve de matière migrante de la bande poreuse et faussant le résultat du contrôle par suite de manque de matière migrante dans la bande poreuse.

Le poussoir est avantageusement protégé lorsqu'il est en position neutre, avant son déclenchement, par la surépaisseur que forme le bord périphérique de l'emballage.

Le réceptacle de forme concave complémentaire à celle du poussoir est rigide ; par exemple il est réalisé dans la même matière que le poussoir, mais d'épaisseur augmentée. Dans ces conditions, lorsqu'on actionne le dispositif pour l'initialiser en le pinçant entre deux doigts, s'appuyant l'un sur le poussoir, l'autre sur le réceptacle, le poussoir seul se déforme ce qui garantit la régularité du contact du poussoir déformé en position active contre la réserve de matière migrante, elle-même appliquée et pressée contre la bande de matière poreuse et le réceptacle.

Suivant une autre caractéristique, l'enveloppe est en deux parties, une partie supérieure formant le poussoir et une partie inférieure avec le réceptacle.

Cette enveloppe est, en particulier, réalisée par thermoformage d'un film de matière plastique. De façon avantageuse, le bord périphérique de l'enveloppe, c'est-à-dire les deux parties qui le composent, est fermé avec une section en créneau pour rigidifier l'ensemble et favoriser l'assemblage par imbrication de ces deux formes avant que l'ensemble ne soit solidarisé par exemple par soudage de la matière plastique.

Suivant une caractéristique avantageuse, le poussoir est de forme tronconique et la partie de forme complémentaire est également de forme tronconique.

Enfin, suivant une autre caractéristique avantageuse, la réserve est constituée par un élément en matière spongieuse imprégnée de la matière migrante.

### Dessins

La présente invention sera décrite ci-après de manière plus détaillée à l'aide d'un mode de réalisation représenté dans les dessins annexés dans lesquels :
- la figure 1 est une vue de dessus d'un mode de réalisation d'un dispositif de détection et de mesure quantitative selon l'invention,
- la figure 2 est une coupe schématique par un plan médian du dispositif de détection représenté à échelle agrandie,
- la figure 3A est une vue en coupe à échelle agrandie du dispositif avant son déclenchement,
- la figure 3B est une vue en coupe analogue à celle de la figure 3A, le dispositif étant déclenché.

### Description d'un mode de réalisation

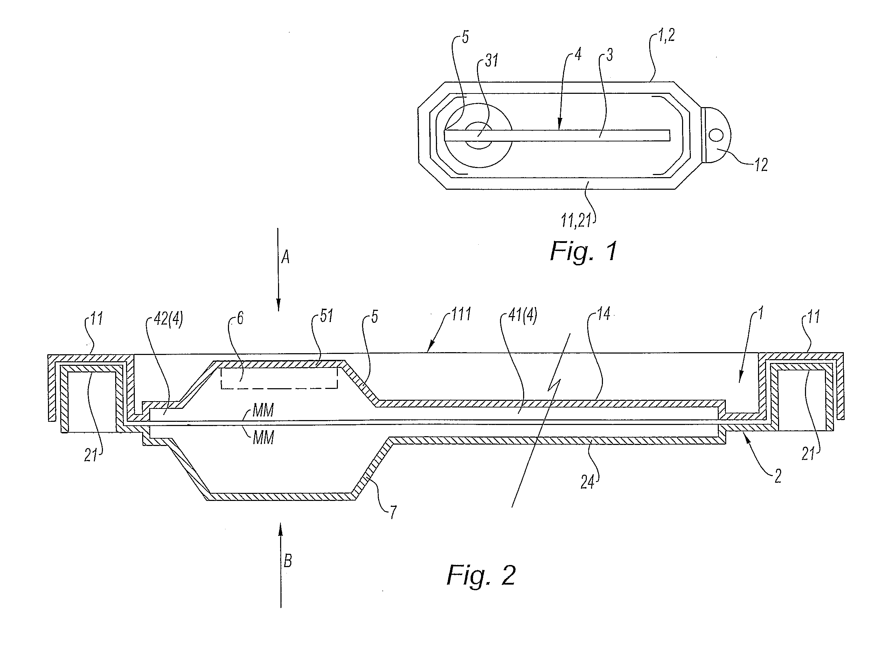

Selon la figure 1, l'invention concerne un dispositif de détection et de mesure quantitative de l'exposition d'un objet à une température à contrôler en prenant en compte la durée d'exposition.

Un tel dispositif est associé à un produit, par exemple un produit alimentaire dont on veut contrôler le respect de la chaîne du froid. La température à contrôler est celle du produit. Cette température ne doit pas dépasser une température de consigne TC. Le dispositif de détection est conçu pour détecter le dépassement de cette température de consigne et d'indiquer la durée de dépassement de cette température. En effet, un très bref dépassement de la température de consigne, détecté par le dispositif peut ne pas influencer la température du produit, puisque le dispositif a une inertie thermique beaucoup plus faible que le produit, réagit immédiatement. Il est donc important de pouvoir détecter la durée du dépassement ou une durée supérieure à un seuil.

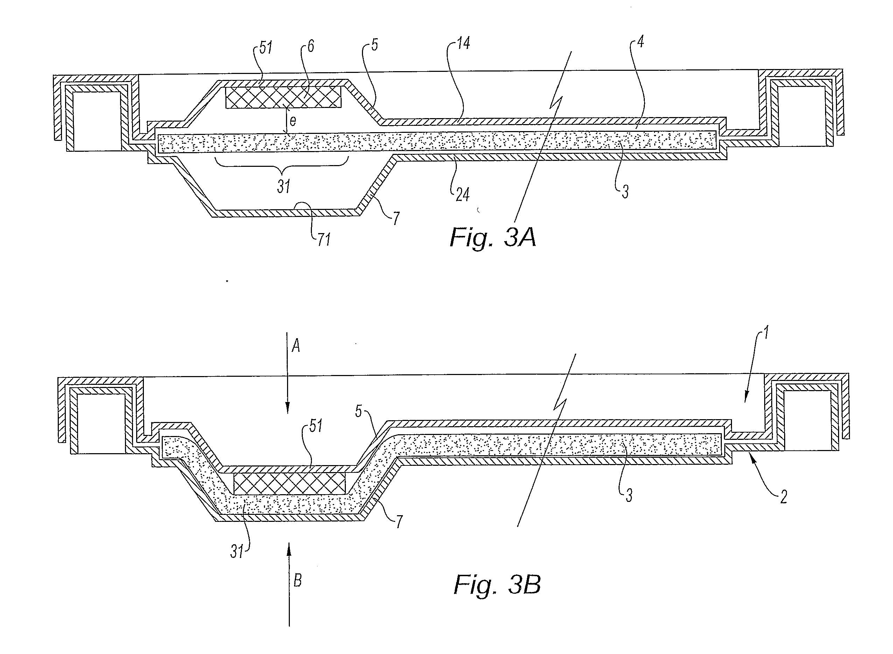

Par convention, l'orientation choisie pour désigner la disposition des éléments ou les mouvements est l'orientation correspondant aux figures 2, 3A, 3B. Mais cette orientation n'est que relative, le dispositif de détection n'étant pas nécessairement orienté de la manière décrite et représentée pour fonctionner correctement. Il fonctionne dans les mêmes conditions, quelle que soit son orientation, que le dispositif soit à plat avec l'orientation présentée dans les figures ou en position renversée ou inclinée ou même verticale, la migration de la matière dans la bande poreuse ne dépendant que des forces capillaires et de la fluidité de la matière migrante et pratiquement pas de la gravité.

Le dispositif est formé d'une enveloppe par exemple en deux parties, une partie supérieure 1 et une partie inférieure 2, sensiblement symétriques, assemblées l'une à l'autre. L'enveloppe contient une bande de matière poreuse 3 formant un chemin de migration. Cette bande 3 porte elle-même l'impression d'une graduation ou coopère avec des repères permettant la détection et la mesure quantitative. Une échelle ou une surface de mesure peut également être portée par l'enveloppe qui est en matière transparente. La bande poreuse 3 a une origine 31 pour ce chemin de migration et le passage de la matière migrante dans la bande poreuse se fait au niveau de l'origine.

La bande poreuse 3 est placée dans un canal 4 débouchant sous un poussoir 5 constitué par une déformation de la matière de l'enveloppe en forme de dôme, par exemple de forme tronconique. Le fond 51 du dôme porte sur la face intérieure, une réserve de matière migrante 6 constituée par exemple par un élément spongieux imprégné de la matière migrante.

En regard du dôme formé par le poussoir 5, l'enveloppe a une partie 7 constituant un réceptacle de forme concave, complémentaire à la forme du poussoir 5.

De manière préférentielle, le réceptacle 7 est plus rigide que le poussoir 5 de sorte que lorsqu'une compression (flèches A, B) est exercée de part et d'autre sur le réceptacle 7 et le poussoir 5, ce dernier se déforme, passant de sa forme neutre à sa forme active comme cela sera vu ci-après.

La matière migrante est une matière changeant d'état au passage de la température de contrôle TC. En dessous de cette température de contrôle, la matière migrante est figée et au-dessus de cette température de contrôle, elle devient fluide et peut migrer dans la bande poreuse 3 lorsqu'elle mise en contact avec celle-ci.

Les deux parties 1, 2 formant l'enveloppe ont des bords complémentaires 11, 21 à section en créneaux ou section rectangulaire pour s'assembler par imbrication de forme. L'une 1 des parties se termine par une patte d'accrochage 12 pour fixer le dispositif au produit à contrôler.

La structure du dispositif apparaît de manière plus précise dans la vue en coupe très schématique et à échelle fortement agrandie de la figure 2, montrant le dispositif coupé par un plan médian perpendiculaire au plan de la figure 1.

La partie supérieure 1 et la partie inférieure 2 de l'enveloppe sont présentées assemblées par l'imbrication des bords périphériques 11, 21.

Le poussoir 5 est en forme de dôme de la partie supérieure 1, tronconique, dont la concavité est tournée vers l'extérieur. Le poussoir 5 chevauche le canal 4 recevant la bande poreuse 3 non représentée. Ce canal 4 est, de préférence, dans l'axe du dispositif lorsque celui-ci a une forme globalement rectangulaire en plan (figure 1). Mais suivant les contrôles à effectuer avec le dispositif et la longueur que nécessite le chemin de migration, le tracé de la bande poreuse peut être un tracé en méandres ou en boucles. La forme représentée ici est la forme la plus simple du canal 4 recevant la bande poreuse.

La canal 4 a une partie principale 41 dans laquelle le produit migrant avance dans la bande poreuse et se poursuit de préférence au-delà du poussoir 5 par une petite branche 42. Pour des raisons d'encombrement de la partie droite de la figure 2, celle-ci a été tronquée au niveau du canal 4, 41.

De part et d'autre du canal 4, la partie supérieure 1 est plane jusqu'à son bord périphérique 11. L'intérieur de la cavité formée par le poussoir 5 reçoit une réserve de matière migrante 6 fixée contre le dessous du poussoir en restant très au-dessus du plan de jonction MM de l'enveloppe et au-dessus du canal. Cette réserve 6 est schématisée par un trait interrompu.

Le plan de jonction MM est représenté séparé pour les deux parties 1, 2 ; en réalité, lorsque les parties 1, 2 sont assemblées, le plan de jonction est unique.

La partie inférieure 2 de l'enveloppe a une forme complémentaire de celle de la partie inférieure 1. Son bord 21 est de même tracé que celui (11) de la partie supérieure 1 mais sa section rectangulaire est diminuée pour pouvoir s'introduire dans le bord 11 de la partie supérieure 1 par un assemblage mécanique par la forme des deux parties.

La coupe de la figure 2 montre que le haut du bord 11 de la partie supérieure 1 dépasse le niveau du dôme du poussoir 5 pour le protéger.

La partie inférieure 2 comporte un logement 24 en position homologue de celle du logement 14 de la partie supérieure 1 pour le compléter et former le canal 4 recevant la bande poreuse 3.

Sous la position du poussoir 5, la partie inférieure 2 comporte une déformation de forme complémentaire de celle du poussoir de façon à recevoir celui-ci en position active. Cette forme constitue le réceptacle 7 destiné à favoriser le passage régulier de la matière migrante dans la bande poreuse 3 lorsque la matière migrante est fluide. La partie supérieure 1 et la partie inférieure 2 sont, de préférence, réalisées par thermoformage d'une feuille de matière plastique transparente.

Dans une seconde variante non représentée, les deux parties sont reliées par une charnière le long d'un côté. Elles sont alors réalisées avec la même feuille de matière plastique.

La figure 3A qui est une vue en coupe analogue à celle de la figure 2, montre le dispositif terminé. La réserve de matière migrante 6 a été fixée dans le poussoir 5 et la bande poreuse 3 placée dans le canal 4 formé par les deux logements 14, 24 réunis. La bande poreuse 3 n'occupe pas toute la section du canal 4 et sa longueur est telle qu'elle enjambe la cavité formée par le poussoir 5 et le réceptacle 7. L'écartement (e) entre la réserve 6 et la bande poreuse 3 est clairement mis en évidence évitant tout contact entre la réserve 6 et la bande poreuse 3 même lorsque le poussoir 5 est accidentellement légèrement déformé sans toutefois être passé par sa position métastable ce qui forcerait le poussoir à prendre sa forme active. En effet, la matière de la partie supérieure 1 est suffisamment souple pour permettre la déformation élastique du poussoir 5 par enfoncement et passage par une forme ou état métastable correspondant sensiblement au plan de jonction des deux parties supérieure 1 et inférieure 2 de l'enveloppe. Si la déformation du poussoir 5 se poursuit même légèrement au-delà de ce plan théorique, la déformation induite dans la matière du poussoir tend à redéployer élastiquement le poussoir 5 pour se décomprimer ; il prend alors une forme bombée, sensiblement symétrique à sa forme initiale vers laquelle il ne peut revenir de lui-même sans qu'une action opposée ne soit exercée de manière externe.

Le dispositif tel que décrit ci-dessus fonctionne comme suit (figures 3A, 3B).

A l'état initial, non déclenché, le poussoir 5 a une forme bombée, concave (figure 3A). La bande poreuse 3 est fixée dans l'enveloppe ; elle est, par exemple, tendue naturellement dans la cavité sous le poussoir 5. Cette partie 31 de la bande poreuse constitue l'origine du chemin de migration.

En exerçant une poussée sur le poussoir dans le sens de la flèche A et en retenant le réceptacle 7 de forme complémentaire, en appuyant dans le sens de la flèche B, on déforme le poussoir 5 et on le fait passer par la position métastable qui correspond sensiblement à la ligne MM du plan de jonction des deux parties de l'enveloppe. A partir de cette position, le poussoir 5 ne peut plus reprendre sa forme initiale neutre et il est entraîné par l'élasticité de la matière dans sa forme active représentée à la figure 3B.

Dans cette forme active, le poussoir 5 comprime la réserve de matière migrante 6 contre le fond 71 du réceptacle 7 en écrasant la réserve 6 contre la zone d'origine 31 du chemin de migration de la bande migrante 3, elle-même tirée dans la concavité du réceptacle 7 de la partie inférieure 2.

On réalise ainsi un contact précis, sur une surface importante, entre la réserve 6 de matière migrante et l'origine 31 du chemin de migration.

A ce moment, par hypothèse, puisque le produit contrôlé est maintenu à la bonne température, c'est-à-dire à une température inférieure à la température de consigne, la matière migrante de la réserve 6 reste dans la réserve et sans passer dans la bande poreuse 3, 31. Le dispositif est simplement déclenché.

Si ensuite, la température à laquelle est exposé le dispositif (et le produit à contrôler) dépasse la température de consigne, la matière migre de la réserve 6 dans la bande poreuse 3 et chemine dans celle-ci. Le chemin de migration indique cette migration par son changement d'aspect (par exemple d'opaque, il devient translucide) ou par un changement de couleur si la matière migrante a une couleur différente de la bande poreuse. Ce cheminement se repère par des graduations.

La fabrication du dispositif de contrôle de température décrit ci-dessus se fait de manière très simple d'abord par le formage des deux parties de l'enveloppe puis, la mise en place d'une réserve de matière migrante dans le poussoir de l'une de partie et de la bande de matière poreuse dans le logement de l'autre partie. Puis, on réunit les deux parties ou on referme l'emballage et on solidarise les deux parties. Le dispositif est alors terminé.

Comme la réserve de matière migrante est hors contact de la bande poreuse, le dispositif peut être fabriqué et assemblé à température ambiante. Il peut également être stocké dans ces conditions.

Ce n'est qu'avant de déclencher le dispositif pour contrôler un produit que le dispositif doit être mis à une température inférieure à la température de contrôle pour figer la matière migrante dans la réserve et éviter que celle-ci ne passe immédiatement dans la bande de contrôle lorsque le dispositif est déclenché par une action sur son poussoir alors qu'à ce moment, par hypothèse, le produit auquel est associé le dispositif de contrôle est à sa température de conservation, inférieure à la température de contrôle.

Toutefois, pour des détections moins rigoureuses, par exemple dans un réfrigérateur, on peut déclencher le dispositif immédiatement et l'amorce de migration permet à l'utilisateur de contrôler le fonctionnement du dispositif.

## Revendications

1. Dispositif de détection et de mesure quantitative de l'exposition d'un objet à une température à contrôler avec prise en compte de la durée d'exposition,
dispositif formé d'une enveloppe contenant
- une bande de matière poreuse formant un chemin de migration,
- une dose de matière migrante changeant d'état au passage de la température de contrôle (TC) pour se propager alors par capillarité à une vitesse déterminée dans la bande poreuse par imprégnation progressive, donnant par sa limite de progression, une mesure quantitative de l'exposition de l'objet à une température dépassant la température de contrôle,
- un poussoir en forme de dôme, intégré à l'enveloppe et déformable de manière irréversible entre sa forme neutre stable et une forme active, stable libérant la matière migrante dans la bande poreuse, en passant par un état métastable,
**caractérisé en ce que**
- le chemin de migration dans la bande poreuse (3) a son origine (31) au droit du poussoir (5),
- la réserve de matière migrante (6) est portée par la face intérieure (51) du poussoir (5) et
- en position, neutre, la réserve de matière migrante (6) est écartée de l'origine (31) du chemin de migration d'une distance (e) qui ne peut être parcourue que par la déformation complète du poussoir (5) passant de sa forme neutre à sa forme active, appliquant la réserve de matière migrante (6) contre la bande poreuse (3), à l'origine (31) du chemin de migration.

2. Dispositif selon la revendication 1,
**caractérisé en ce que**
l'enveloppe a un réceptacle (7) de forme concave complémentaire à celle du poussoir (5) en position active et est située en regard du poussoir (5) formant une zone de contact définie, entre la matière migrante du réservoir et l'origine (31) du chemin de migration.

3. Dispositif selon la revendication 2,
**caractérisé en ce que**
le réceptacle (7) de forme concave complémentaire à celle du poussoir (5) est rigide.

4. Dispositif selon la revendication 1,
**caractérisé en ce que**
l'enveloppe est en deux parties (1, 2), une partie supérieure (1) formant le poussoir (5) et une partie inférieure (2) avec le réceptacle (7) de forme concave complémentaire à celle du poussoir (5) et un canal (4) recevant la bande poreuse (3) du chemin de migration.

5. Dispositif selon la revendication 1,
**caractérisé en ce que**
la réserve (6) est une matière spongieuse imprégnée de la matière migrante.

6. Dispositif selon la revendication 1,
**caractérisé en ce que**
l'enveloppe (1, 2) est réalisée par thermoformage dans un film en matière plastique.

7. Dispositif selon les revendications 4 et 6,
**caractérisé en ce que**
le bord périphérique (11, 21) de l'enveloppe (1, 2), c'est-à-dire le bord (11, 21) des deux parties (1, 2) qui le composent, est replié avec une section en créneau.

8. Dispositif selon les revendications 1 et 2,
**caractérisé en ce que**
le poussoir (5) est de forme tronconique et le réceptacle (7) de forme complémentaire est également de forme tronconique.
